# EUROPEAN PATENT SPECIFICATION

(11) **EP 0 585 571 B1**
(45) Date of publication and mention of the grant of the patent: **21.06.1995**
(21) Application number: 93111179.3
(22) Date of filing: 13.07.1993
(51) Int. Cl.: C09D 17/00, C09B 67/00, C09D 7/00

(54) **Environmentally friendly aqueous tinting concentrates for paints and the like**
Umweltfreundliche, wässrige Konzentraten zur Färbung von Anstricher und dergleichen
Concentrés aqueux écophiles pour la coloration des peintures et similaires

(30) Priority: 23.07.1992 US 917398
(43) Date of publication of application: 09.03.1994
(73) Proprietor: THE GLIDDEN COMPANY, Cleveland Ohio 44115 (US)
(72) Inventor: Elsamanoudi, Ahmed Ahmed, Strongsville, Ohio 44136 (US)
(74) Representative: Cooper, Alan Victor

(56) References cited:
- GB-A- 861 223
- US-A- 4 011 389

## Description

This invention relates to environmentally friendly aqueous tinting concentrates (also known as pigment dispersions) which are especially suitable for tinting paints and the like at the point of sale in retail or trade shops or stores. The concentrates contain solid particulate pigment (which may be organic or inorganic) dispersed in a fluid medium comprising water, organic material known as a carrier vehicle and a non-ionic surfactant comprising hydrophobic moiety.

Tinting pigments contribute colour and opacifying pigments contribute opacity to a paint or the like. Pigments may also contribute durability and hardness to a dried coat of paint. Paints and the like often contain other solid particulate materials known as extenders or fillers which contribute other effects such as modified viscosity in the fluid paint or a matt appearance to the dried coat of paint. These extenders and fillers will also be treated as pigments for the purposes of this invention.

The tinting concentrates are frequently produced by comminuting pigment in the presence of the fluid medium using high speed mixers or low energy equipment such as Cowles dissolvers or vertical sandmills. For effective use of low energy equipment, it is important that the viscosity of the fluid medium be shear-thinning, that is to say it reduces with increasing shear rate without being dialatent. Dialatency is the phenomenon whereby the viscosity reaches a minimum as shear rate increases and then as shear rate increases further, viscosity also increases with it. One of the difficulties in formulating tinter concentrates is to find a combination of carrier vehicle and non-ionic surfactant which permits the fluid medium to be shear-thinning without suffering dialatency.

The paints and the like may be aqueous or organic-solvent (e.g. hydrocarbon) based. The term "paints and the like" is used to embrace paints and similar coating compositions such as varnishes and woodstains, however for brevity hereinafter, the word "paints" will be used to denote both paints and these other coating compositions.

Paints are of course well known viscous fluid compositions which are applied to a substrate using a conventional tool such as a brush, roller, pad or spray. On the substrate they flow out to form a continuous coating which then dries at ambient temperatures (with curing in some cases) to produce a dried continuous coat or film (as it is more usually called in the trade) of paint which serves to decorate and/or protect the substrate. The dried film may protect the substrate against water, particularly rain so the dried film should not be sensitive to water.

Paints comprise a volatile liquid (water or organic solvent which is lost by evaporation as the paint dries), various conventional paint additives (for example surfactants and biocides), pigment uniformly dispersed in the volatile liquid and film-forming binder dissolved or dispersed in the volatile liquid. The film-forming binder is a polymeric material such as an alkyd resin or a polymer (including copolymers) of ethylenically unsaturated monomers such as acrylic or methacrylic acids, and/or their alkyl esters, vinyl esters and vinyl aromatics. The binder serves several purposes. Firstly, it imparts useful rheological properties (notably viscosity) to the fluid paint. Secondly, as the paint dries, it forms the film into which it binds the pigment and other additives. Thirdly, it provides adhesion between the dried film and the substrate.

Generally fluid paints are manufactured on an industrial paint plant by first preparing the polymeric binder and then mixing together the binder and the various other components of the paint. If the paint is to be tinted on the plant (as opposed to at the point of sale), the mixing procedure will include a step in which the pigment is comminuted in the presence of the binder using for example a high speed mixer or dissolver. Finally the mixture is thinned to meet commercial standards.

The so-called consumer latex paints (also called emulsion paints) are of special interest to this invention. Consumer latex paints are sold to ordinary members of the public or to small independent tradesmen serving them. These paints are applied at ambient temperatures primarily to architectural substrates which may be internal or external surfaces of buildings or their fittings. After application, they dry in the air also at ambient temperatures. Consumer latex paints comprise polymers (and usually copolymers) of ethylenically unsaturated monomers usually prepared by emulsion polymerisation carried out in water containing some volatile organic solvent. The solvent may serve as a coalescing solvent, that is to say, a solvent which assists the particles of polymer to coalesce into a film as the paint dries. Volatile organic compounds or "VOCs" such as these solvents, are nowadays regarded as being environmentally unfriendly and so their presence in an otherwise aqueous paint is undesirable because it prevents the paint from being totally environmentally friendly. The undesirability of these solvents has led to the appearance of new experimental zero VOC air dry latex paints. Furthermore, coalescing solvents such as 2,2,4-trimethylpentanediol (available as "Texanol") are also malodorous. The odour associated with the gradual volatilisation of the coalescing solvent is considered offensive by many consumers and it often lingers for days or weeks after the paint has been applied and has dried. Thus an urgent commercial need exists to eliminate various volatile organic compounds from paints and especially from consumer latex paints. This has lead to a demand to remove them even from tinter-concentrates even though the amount of tinting concentrate in a paint is relatively small.

Whilst large amounts of coloured paints are made on industrial plants and supplied ready mixed to shops and stores, a significant proportion of coloured paint is custom tinted at the point of sale to match a particular non-standard colour selected by the consumer. It is not practicable for a shop or store to comminute pigment in the presence of the binder for this requires the use of techniques which are too sophisticated.

Therefore, point of sale tinting essentially comprises adding a tiny amount of a tinting concentrate pre-manufactured in a factory to a white or pastel base paint and then simply thoroughly mixing the concentrate into the paint by means of vigorous automatic stirring or shaking so as to produce a paint of the desired custom colour. The tinting concentrate is added to the base paint in amounts corresponding to 1 to 12 fluid ounces per gallon (7.8 to 93.6 ml/l) of base paint. Either a single tinting concentrate or combinations of two or more (preferably three) tinting concentrates may be used.

The tinting concentrate is usually dispensed volumetrically into the base paint from a canister forming part of an automatic or manual (e.g. Harbil) dispensing machine. The concentrate is pumped often by means of a tri-valve pump from the canister via a narrow bore (1 to 4 diameter) nozzle under a shear rate of around 250 to 350 sec⁻¹. The shear rate through a 3 mm bore for a conventional dispensing rate has been calculated to be around 300 sec⁻¹. The bore of the nozzle may be permanently open to the atmosphere or closeable when not in use.

Tinter concentrates usually contain high concentrations of pigment in the fluid medium so that the concentrate will have a high PVC, that is to say a high proportion by volume of pigment. Usually the PVC is from 20 to 80%.

The tinter concentrate must avoid components which would cause it to harm the base paint significantly or which would hinder its own manufacture or ability to be dispensed through the narrow bore nozzle. For example it should have enough water-retention (humectancy) and water-attraction (hygroscopicity) to retard its own rate of drying so that it is unlikely to dry in and block the narrow bore of the dispensing nozzle. However its humectancy and hygroscopicity should not be so great as to make the paint unduly water-sensitive. The components of the concentrate should not harm significantly the freeze/thaw stability of the paint.

The tinter concentrate should also have appropriate rheological characteristics both under low and high shear. It should have a high viscosity at low or zero shear rates for otherwise pigment would too easily settle out from the concentrate. In addition too low a viscosity at low shear would enable the concentrate to entrap air which would hinder dispensing because the dispensed stream of concentrate would spurt and deflect from the vertical. At high shear rates (e.g. 300 sec⁻¹) the viscosity should be low in order to facilitate the mixing of the pigment into the fluid medium using low energy equipment and also to facilitate pumping through the narrow bore. The viscosity should decrease continually with increasing shear rate and not undergo dialatency for dialatency too would make pumping through the narrow bore difficult.

The fluid component of the tinter concentrate should have an ability to wet a wide variety of pigment particles and it should be compatible with both aqueous and organic solvent based base paints thereby avoiding or reducing the need for multiple stocking of concentrates.

The need for acceptable tinting concentrates to meet all the above requirements has led to the long-established practice of using tinter concentrates whose fluid media comprise water, ethylene glycol carrier vehicle and an alkyl (usually octyl or nonyl) phenyl ethoxylate non-ionic surfactant comprising hydrophobic alkylphenyl moiety as disclosed in 1961 in Examples 9 and 10 of British Patent Specification GB 861 223. The ethylene glycol also serves as a humectant and hygroscopic agent. The alkylphenyl ethoxylate confers pigment wetting, dispensing stability and dispersion stability. Unfortunately, ethylene glycol is suspected of being toxic and an animal teratogen and has a volatility which is now regarded as too high for environmental acceptance. Volatility can be measured as a percentage weight loss according to ASTM Test D-2369-87. Paints and the like should nowadays preferably meet the standards of Rule 24 of the United States Environmental Protection Agency and especially have a volatile organic content (VOC) of less than 0.2 wt%. Further guidance on measurements needed to determine VOC is given in ASTM Manual Series MNL4 and ASTM Test D-3960.

Alkylphenyl ethoxylates are also environmentally questionable because they degrade to phenolic compounds which are suspected of being toxic to fish. Accordingly, it is an object of this invention to provide an acceptable tinting concentrate which avoids the use of both ethylene glycol and alkyl phenyl ethoxylates and so is less toxic and contains less volatile organic compound or VOC.

Accordingly, this invention provides an environmentally friendly aqueous tinting concentrate for paints, varnishes and woodstains which concentrate contains solid particulate pigment dispersed in a fluid medium comprising water, carrier vehicle and non-ionic surfactant comprising hydrophobic moiety wherein the carrier vehicle is a poly (ethylene glycol) having a number average molecular weight of 190 to 700 inclusive (preferably 200 to 600) and the hydrophobic moiety of the surfactant is linked to a glycoside or thioglycoside moiety. It has been found that this selection of poly (ethylene glycol) having a narrow range of low molecular weights for use with a carrier vehicle comprising hydrophobic moiety linked to glycoside or thioglycoside not only avoids the presence of two possibly toxic components including one which is also an unwelcome volatile organic compound, but it also produces a tinting concentrate having properties which equal or exceed those of the current tinter concentrates. For example, tinter concentrates of this invention neither significantly affect the freeze/thaw stability of the fluid paints nor do they increase the water-sensitivity of the dried paint films yet their components are sufficiently humectant and hygroscopic to prevent blockage of the narrow bore nozzles of dispensing machines during reasonably long periods of use. In fact longer periods of use are frequently possible with the concentrates of this invention than with those based on combinations of alkylphenyl ethoxylates and ethylene glycol. The tinter concentrates of this invention also have acceptably high viscosities at low rates of shear which then "thin" (i.e. reduce) without dialatency as the shear rate is increased to 300 sec⁻¹. The fluid media of the tinter concentrates have the ability to wet a wide range of pigments and they are compatible with both aqueous and organic solvent-borne paints and in particular with the new experimental air-drying latex paints which contain zero volatile organic compounds. The tinting concentrates are especially suitable for use in custom tinting at the point of sale.

The poly (ethylene glycol) carrier vehicles used in this invention are essentially linear low molecular weight polymers formed by the addition homopolymerisation of ethylene oxide to produce a linear polymer having the structure

HO - (CH₂ - CH₂ -0)ₙ - H

where n is at least 4 but less than 17, is desirably 4 to 14 and is preferably from 6 to 9 inclusive. The poly (ethylene glycol) should be largely free of very low molecular weight volatile organic impurities, notably ethylene glycol itself and its dimer and trimer. Preferably, the poly (ethylene glycol) should contain less than 0.2 wt% of volatile organic impurities as determined by the Gas Saturation Method. Particularly useful commercially available poly (ethylene glycols) are Union Carbides PEG 300 and PEG 400 which have number average molecular weights of 300 ± 15 and 400 ± 15 respectively. Their PEG 200 (number average molecular weight 200 ± 10) and poly (ethylene glycols) of lower number average molecular weight are useful if a positive removal of volatile organic compounds to a level of below 0.2 wt% is made. Poly (ethylene glycols) which are branched or methoxy terminated or have a number average molecular weight of above about 700 are unsatisfactory owing to flocculation and/or viscosity problems with latex paints. The PEGs 200, 300 and 400 are available from Union Carbide Inc. of New York, USA.

The non-ionic surfactant used in this invention contains hydrophobic moiety linked to glycoside moiety. The hydrophobic moiety serves to impart some hydrophobic character to the non-ionic surfactant. Therefore the nature of the hydrophobic moiety is governed by the hydrophilic/lypophilic balance (HLB value) required for the non-ionic surfactant which in turn is governed by the amount of hydrophilic character possessed by the particular glycoside chosen. Preferably the non-ionic surfactant should have an HLB value of from 10 to 14 inclusive. Preferred hydrophobic moieties are linear alkyl groups containing 8 to 30 carbon atoms inclusive and most preferably not more than 16. The preferred alkyl groups contain from 8 to 16 carbon atoms may be derived from fatty (mono-) alcohols which can be in turn obtained by hydrolysis of various natural oils and fats (for example coconut or palm kernel oils or animal fats followed where necessary by hydrogenation to remove unsaturation.

The preferred non-ionic alkyl glycoside surfactant comprises an alkyl group linked to a saccharide (so making an alkylated saccharide) where the saccharide component comprises either a monosaccharide, or alternatively polysaccharides (sometimes called oligosaccharides) which are condensation products of monosaccharides and the polysaccharides primarily two to five monosaccharides linked together with glycosidic linkages. Mixtures of monosaccharides and such polysaccharides optionally with minimal amounts of higher polysaccharides containing up to eight (preferably up to six) monosaccharide units. The saccharide component ordinarily comprises hexose six member rings but can comprise pentose five-member rings or both hexose and pentose rings such as, for example, the disaccharide sucrose comprising a hexose ring linked to a pentose ring.

The monosaccharides are multi-hydroxy cyclic ethers conveniently obtained by hydrolysis of starches, cellulose or sugars. Commercially, the most important monosaccharides are the 5- and 6- membered rings called furanoses and pyranoses respectively. Polysaccharides consist of two or more monosaccharides linked together by the elimination of water from a pair of adjacent hydroxy groups and so polysaccharides are sometimes called anhydrosaccharides.

Glycosides (especially alkyl monoglycosides and polyglycosides) are humectant hygroscopic solids which melt at high temperatures. They are soluble in water presumably because of hydrogen bonding involving their hydoxyl groups and possibly also their ether groups. Water-solubility increases as the number of saccharide rings increases owing to the increased number of hydroxyl and ether groups in the glycoside.

Alkyl glycosides are ordinarily supplied commercially as aqueous solutions typically containing from 50 to 70% of the glycoside. They are available from the Henkel Corporation of Ambler, Pennsylvania, USA or from the Union Carbide Corporation of New York, USA. Both offer alkyl oligoglycosides in which the alkyl moiety contains 8 to 16 carbon atoms and the glycoside moiety has a number average degree of polymerisation (average DP) of about 1.4 to 1.6 Average DP is the number average ratio anhydrosaccharide rings to alkyl groups and it is preferably between 1.4 and 1.7. Typically, average DP is controlled to an accuracy of ± 0.02. Accordingly, the preferred glycosides are primarily mixtures of monoglycosides and polyglycosides with regressively deceasing amounts of di-, tri- and higher glycosides. Particularly preferred glycosides are mixtures of mono- and polyglycosides where the monoglycoside is represented by
R is alkyl 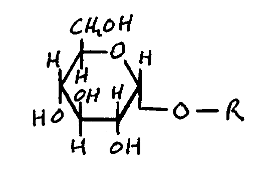
These mixtures typically comprise over 50 wt% and generally between 50 to 70wt% of monoglycoside, between 20 and 30wt% of diglocoside, between 5 and 20wt% of triglycosides and with the balance (if any) being made up of minor amounts of about 10wt% of higher polyglycosides containing 4, 5 or 6 monosaccharide units.

Usually the glycoside surfactant is added to the tinter concentrate at a level of above 2wt% and preferably 2.5 to 7wt% based on the weight of pigment (as weighed when dry) in the concentrate.

The glycoside moiety arid the hydrophobic moiety may be linked by any intermediate linkage which does not significantly harm the usefulness of the tinting concentrate. An ether linkage may be easily achieved by reacting an alkyl alcohol with the saccharide in the presence of acid catalyst to eliminate water and form the glycoside by a condensation process known as Fischer glycosidation. Analogously the alcohol may be replaced by a thioalcohol so that the condensation produces a thioglycoside. Hydrophobic groups may also be introduced by the reaction of a carboxylic acid (especially a C₉ to C₃₀ chain alkanoic acid) with the saccharide to produce an ester linkage wherein the hydrophobic moiety is linked to the glycoside via a carbonyl group. Ether linkages are preferred.

Other useful surfactants which can be used in conjunction with the glycosides can include for instance, non-ionic co-surfactants such as poly (ethylene glycol) monolaurate and/or polysorbates, amphoteric surfactants such as soya lecithin which serves as a rheological stabiliser. Non-ionic co-surfactants are particularly useful when higher concentrations of pigment are present. They are especially useful when the pigment volume concentration (PVC) exceeds 45%. The total surfactant content is preferably 2wt% and most preferably between 6 and 10wt% based on the weight of the dry pigment. Anionic surfactants such as polyacrylates may be used as grinding aids.

In the consumer decorative paint market, common tinting pigments are required for both water and hydrocarbon dispersed paints. The tinting concentrates of this invention require tinting pigments which typically include black, white, organic red, organic yellow, inorganic red, inorganic yellow, and organic blue as well as violet, orange, green, brown and other hues of organic yellow and red. Tinter strength is related to PVC (pigment volume concentration) and higher pigment volume concentrations are preferred to achieve deep colours although reduced strength tinters are frequently employed to obtain accurate tinting for pale or light shades. Useful tinting pigments include for instance ferrite yellow oxide, red iron oxides, ferric iron oxide brown (which is a blend of red, yellow, and black iron oxides), tan oxide (which is similar blend), raw sienna and burnt sienna, raw and burnt umber, copper phthalo cyanine green and blue, dinitroaniline orange #5, carbon black (especially lampblack), toluidine red, parachlor red, (burnt red and maroon red) hansa yellows which are azo coupled metapara nitrotoluidienes and quinacridone red, magenta and violet. Tinting pigments preferably comprise between 5 and 60wt% of the concentrate on dry solid weight basis.

Opacifying pigments can be added to the tinting concentrates of this invention either as opacifiers or if desired, to provide a white tinter concentrate in which case the pigment is both a tinting pigment and an opacifying pigment. Opacifying pigments are generally pigments having a refractive index of at least 1.8. The preferred white inorganic opacifying/tinting pigment is rutile titanium dioxide having a weight average particle size between about 0.2 to 0.4 micrometres. Although most opacifying pigments are white, they all have in common the fact that they have a high index of refraction of preferably above about 1.8 regardless of their tinting effect- on the resulting paint film. Opacifying pigments usually comprise between about 30 and 60wt% of the concentrate on a dry solids weight basis to provide a white tinting concentrate.

The tinting concentrates can further contain non-tinting non-opacifying extenders or fillers often referred to as "inerts". To provide an aqueous dispersed tinting composition having a total PVC (pigment volume content) of between about 20% and 70% but sometimes not above 45wt% on a dry solids weight basis. Inerts include clays such as kaolinite clays, silica, talc, mica, barytes, calcium carbonate, and other conventional fillers. All fillers or extenders have fairly low refractive indices and can be generally regarded as pigments. Extender and filler pigments generally should not be above 15 microns in effective diameter for painting purposes and generally are of particle size not substantially larger than 5 micrometers for use in tinting concentrates. Filler and extender pigments usually comprise between about 5 and 50wt% of the concentrate on a dry solids weight basis. The concentrate preferably contains between about 10 and 30wt% of water based on the total concentrate.

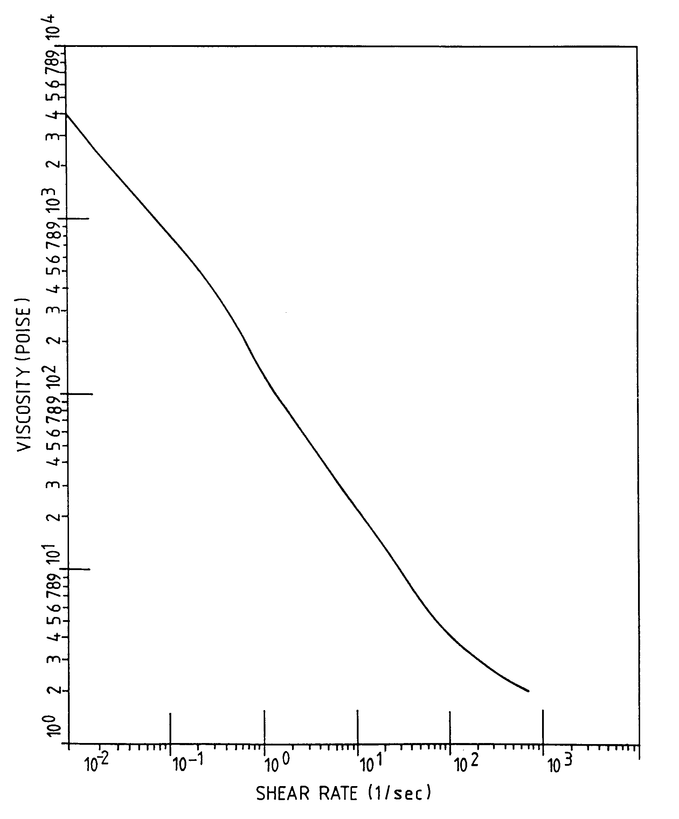

The invention will now be illustrated by the following Examples 1 to 14 of which Examples A to C are comparative. The Examples refer to the drawing which shows a graph of viscosity against shear rate for the low molecular weight poly (ethylene glycol) carrier vehicles used in this invention.

In the Examples rheology studies were performed on laboratory samples produced according to the various formulations given using standard laboratory procedures. The samples were acceptable for colour and compatibility with the base paint. The actual flow curves were characterised using a cone and plate rheometer and the ¹Carri-Med computer system to give a controlled shear stress. These resultant curves were compared to freshly prepared controls which represent the current prior art formulations based on ethylene glycol carrier vehicles in conjunction with nonyl phenol ethoxylate surfactant. The test procedure was as follows:
¹ The Carri-Med system is described in the brochure "The Carrie-Med CSL Rheometer" published by Carri-Med Ltd. of Dorking, England.

The cone and plate rheometer was fitted with a 4 cm diameter 2° cone and was used to measure the flow of tinter concentrates at a temperature of 25°C. The test procedure involved running four flow curves on a given concentration in succession. First a procedure designated "coil low" is run. In the first coil-low run, the specimen is applied to the plate and allowed to rest there for 30 seconds to allow the liquid to equilibrate. Then rotation of the cone is started giving a shear-imparting torque which starts at zero and increases linearly to a maximum torque of 5000 dyne-cm (equivalent to a shear stress of 298 dyne/cm²) over a period of 2 minutes and then decreases linearly back to zero over the same time period. Following the first run, a further equilibration period (this time of 15 minutes) is allowed and then a second run is performed on the same specimen, using the same coil low procedure. The 15 minutes equilibration period is an arbitrary time sufficient to allow the sample to recover its rest structure. Immediately next,(i.e. no equilibration) a third run on the same specimen is performed using a procedure called "coil high" which works exactly like coil low, except that the maximum torque reached is in the range 35,000 to 100,000 dyne-cm, depending on what the consistency of the dispersion specimen happens to be. The final run is a repeat of the third run performed in order to see whether the first high-torque run was sufficient to break down the structure completely, or if further breakdown will occur on a second high-shear experience. All tests were performed on the same specimen of material in that the sample is not cleaned off and replaced with a fresh one between procedural steps. The rheological test results of the pigmented tinting concentrates of this invention essentially follow the curve profile shown in the drawing, which shows them to be shear-thinning without any dialatency.

Colour and compatibility of each tinter concentrate dispersion were evaluated for colour and for compatibility with the base paints. An amount of base paint equal to the desired weight per gallon (3.79 litre) times a factor of 27.5 was weighed into a half pint (0.47 litre) can. Then an amount of pigment of both the standard and batch equal to the desired weight per gallon times a factor of 0.444 was accurately weighed into a half pint of the base paint under test. Each can was stirred with a spatula thoroughly and then shaken for five minutes on a Red Devil paint shaker. Both standard and batch were drawn down side by side on a ²Leneta Form WB using a 6 mil (0.15 mm) bird film applicator. After the drawdowns were dried thoroughly at room temperature, the colour difference was evaluated both visually and spectrophotometrically using the ACS colour computer and spectrophotometer. Acceptable tint strength and colour development resulted with negligible deviation from the standard paint colour.
² Leneta Forms WB are avaiable from the Leneta Company of Ho-Ho-Kus, New Jersey, USA.

In all the Examples listed below, all tinter concentrates were prepared by using the indicated ingredients to formulate tinter concentrates free of ethylene glycol and nonyl phenol ethoxylate (NPE) but which were similar to existing Glidden "Dramatone" tinter concentrates which did contain ethylene glycol and NPE. The concentrates were tested in canisters for ease of dispensing which was judged by the pressure required to make the concentrate flow through an open 3 mm diameter narrow bore nozzle. The results were reported as either easier to dispense or more difficult to dispense than the similar Glidden "Dramatone" tinter concentrate. The accuracy of the dispensing of measured small volumes was also tested by dispensing a small increment (4/64 fluid oz. or 1.85 ml) three times a day for 3 consecutive days. The weight of the dispensed concentrates were compared to the theoretical weight of an equal volume. A dispense accurate to +/- 3.0% of the theoretical was achieved.

These concentrates were also used to tint trade sales interior and exterior latex paints of different gloss levels. Films 6 mil (0.15mm) thick were applied on Leneta charts, tested for flocculation, and measured for colour difference versus the "Dramatone" control concentrates. Acceptable colour difference was defined as 1.0 CIE lab unit.

### EXAMPLES 1 to 3 AND COMPARATIVE EXAMPLE A

Carbon black pigment (PB-7) was dispersed in each of the carrier vehicles which consisted of water, one of the poly (ethylene glycol) series PEG 200, PEG 300 or PEG 400, alkyl polyglucoside and a non-ionic surfactant blend (including sorbitol) to make a tinter concentrate. The concentrate was then compared to the ethylene glycol/NPE control. The tinter concentrate formulations were as follows:

| Example | 1 | 2 | 3 | A |
|---|---|---|---|---|
| Carrier vehicle | PEG 200 | PEG 300 | PEG 400 | Ethylene Glycol |
| Vehicle | 20.00 | 20.00 | 20.00 | 20.00 |
| Water | 20.72 | 20.72 | 20.72 | 20.72 |
| NEP | 0 | 0 | 0 | 5.0 |
| Alkyl polyglucoside | 5.00 | 5.00 | 5.00 | 0 |
| Co-surfactants | 3.14 | 3.14 | 3.14 | 3.14 |
| Soya lecithin | 3.03 | 3.03 | 3.03 | 3.03 |
| Glycerine | 3.00 | 3.00 | 3.00 | 3.00 |
| Biocide | 0.30 | 0.30 | 0.30 | 0.30 |
| Extender pigment (clay) | 39.50 | 39.50 | 39.50 | 39.50 |
| Pigment black | 5.31 | 5.31 | 5.31 | 5.31 |
| | 100.00wt% | 100.00wt% | 100.00wt% | 100.00wt% |
| Weight lb per gallon | 12.43 | 12.43 | 12.44 | 12.42 |
| or Kg/litre | 1.454 | 1.454 | 1.455 | 1.453 |
| PVC % by volume | 42.74 | 42.74 | 42.74 | 64.15 |
| VOC(volatile organic cmpds) gms/liter | 0 | 0 | 0 | 410.00 |
| Pigments weight % (tinting & extender) | 44.81 | 44.81 | 44.81 | 44.81 |
| Pigment volume % (tinting & extender) | 29.46 | 29.46 | 29.46 | 29.46 |
| All percentages are by weight unless otherwise stated | | | | |

### EXAMPLES 4 to 6 AND COMPARATIVE EXAMPLE B

Red oxide pigment Red 101 was dispersed in each of the carrier vehicles which consisted of water, one of the poly (ethylene glycol) PEG 200, PEG 300, or PEG 400 and a surfactant blend to make a tinter concentrate. The concentrate was then compared to the ethylene glycol/NEP control. The tinter concentrate formulations were as follows:

| Example | 1 | 2 | 3 | B |
|---|---|---|---|---|
| Carrier vehicle | PEG 200 | PEG 300 | PEG 400 | Ethylene Glycol |
| Vehicle | 18.00 | 18.00 | 18.00 | 18.00 |
| Water | 12.28 | 12.28 | 12.28 | 12.28 |
| NPE | 0 | 0 | 0 | 2.50 |
| Alkyl polyglucoside | 2.50 | 2.50 | 2.50 | 0 |
| Co-surfactants | 2.20 | 2.20 | 2.20 | 2.20 |
| Soya lecithin | 2.50 | 2.50 | 2.50 | 2.50 |
| Glycerine | 2.50 | 2.50 | 2.50 | 2.50 |
| Biocide | 0.25 | 0.25 | 0.25 | 0.25 |
| Extender pigment (clay) | 26.00 | 26.00 | 26.00 | 26.00 |
| Red Oxide PR101 | 33.77 | 33.77 | 33.77 | 33.77 |
| | 100.00wt% | 100.00wt% | 100.00wt% | 100.00wt% |
| Weight lb per gallon | 15.77 | 15.77 | 15.77 | 15.77 |
| kg/l | 1.845 | 1.845 | 1.845 | 1.845 |
| PVC % by volume | 34.24 | 34.24 | 34.24 | 69.99 |
| VOC (volatile organic cmpds) gms/liter | 0 | 0 | 0 | 435.00 |
| Pigment weight (tinting & clay) | 59.77 | 59.77 | 59.77 | 59.77 |
| Pigment volume % (tinting & clay) | 24.81 | 24.81 | 24.81 | 24.81 |
| All percentages by weight unless otherwise stated. | | | | |

### EXAMPLES 7 to 9 AND COMPARATIVE EXAMPLE C

Hansa Yellow 74 pigment was dispersed in each of the carrier vehicles which consisted of water one of the poly (ethylene glycol) series PEG 200, PEG 300, and PEG 400 and a surfactant blend to make a tinter concentrate. The concentrate was then compared to the ethylene glycol/nonyl phenyl ethoxylate control. The tinter concentrate formulations were as follows:

| Example | 1 | 2 | 3 | C |
|---|---|---|---|---|
| Carrier Vehicle | PEG 200 | PEG 300 | PEG 400 | Ethylene Glycol |
| Vehicle | 23.00 | 23.00 | 23.00 | 23.00 |
| Water | 23.30 | 23.30 | 23.30 | 23.30 |
| NEP | 0 | 0 | 0 | 7.00 |
| Alkyl polyglucoside | 7.00 | 7.00 | 7.00 | 0 |
| Co-surfactants | 1.40 | 1.40 | 1.40 | 1.40 |
| Glycerine | 2.00 | 2.00 | 2.00 | 2.00 |
| Biocide | 0.30 | 0.30 | 0.30 | 0.30 |
| Extender pigment (clay) | 23.00 | 23.00 | 23.00 | 23.00 |
| Hansa Yellow 74 | 20.00 | 20.00 | 20.00 | 20.00 |
| | 100.00wt% | 100.00wt% | 100.00wt% | 100.00wt% |
| Weight lb per gallon | 11.10 | 11.11 | 11.13 | 11.10 |
| kg/l | 1.298 | 1.299 | 1.302 | 1.298 |
| PVC % by volume | 42.31 | 42.31 | 42.31 | 60.37 |
| VOC (volatile organic cmpds) gms/liter | 0 | 0 | 0 | 444.00 |
| Pigment weight (tinting & extender) | 43.00 | 43.00 | 43.00 | 43.00 |
| Pigment volume % (tinting & extender) | 29.09 | 29.09 | 29.09 | 29.09 |
| All percentages by weight unless otherwise stated. | | | | |

### EXAMPLE 10

Black pigment concentrates prepared from Examples 1, 2 and 3 (based on poly (ethylene glycols) PEG 200, PEG 300, PEG 400 and Alkyl polyglucoside surfactant system) were used to tint Glidden latex base paint Y3418, Glidden semi-gloss alkyd paint base Y4618, and experimental zero VOC latex base paint Y7800 whilst using the standard black tinter concentrate (based on ethylene glycol and nonyl phenol ethyoxylate) as a control. The colour differences were found to be as follows:

| Base Paint Used | Carrier Vehicle Used | Delta L Lightness Difference | Delta C Chroma Difference | Delta E Total Difference |
|---|---|---|---|---|
| Latex base Y3418 | PEG 200 | -0.24 | 0.15 | 0.29 |
| | PEG 300 | -0.52 | 0.16 | 0.54 |
| | PEG 400 | -0.55 | 0.22 | 0.59 |
| Alkyd base Y4618 | PEG 200 | -0.54 | 0.04 | 0.54 |
| | PEG 300 | -0.08 | 0.04 | 0.54 |
| | PEG 400 | 0.60 | 0.05 | 0.60 |
| Zero VOC base Y7800 | PEG 200 | 0.45 | 0.12 | 0.47 |
| | PEG 300 | 0.17 | 0.07 | 0.18 |
| | PEG 400 | 0.24 | 0.15 | 0.28 |

Total colour difference is based on the equation:

${\text{ΔE = (ΔL² + ΔC²)}}^{\text{½}}$

The specification for acceptable colour difference for Trade Sales paints is Delta E = 0.0 to 1.0 CIE unit.

### EXAMPLE 11

Similar to Example 10, red oxide pigment concentrates prepared from Example 4, 5 and 6 (based on poly (ethylene glycols) PEG 200, PEG 300, PEG 400 and alkyl polyglucoside surfactant system) were used to tint Glidden latex base paint Y3418, Glidden semi-gloss alkyd base paint Y4618, and experimental zero VOC latex base paint Y7800 using the current standard red oxide tinter concentrate (based on ethylene glycol and nonyl phenol ethoxylate) as a control. The colour differences were found to be as follows:

| Base Paint Used | Carrier Vehicle Used | Delta L Lightness Differences | Delta C Chroma Differences | Delta E Total Differences |
|---|---|---|---|---|
| Latex base Y3418 | PEG 200 | -0.43 | 0.51 | 0.76 |
| | PEG 300 | -0.26 | -0.09 | 0.29 |
| | PEG 400 | -0.21 | 0.15 | 0.29 |
| Alkyd base Y4618 | PEG 200 | -0.46 | 0.75 | 0.96 |
| | PEG 300 | -0.43 | 0.09 | 0.46 |
| | PEG 400 | -0.36 | 0.80 | 1.02 |
| Zero VOC Y7800 base | PEG 200 | -0.19 | 0.48 | 0.57 |
| | PEG 300 | -0.08 | -0.31 | 0.41 |
| | PEG 400 | 0.07 | -0.14 | 0.17 |

### EXAMPLE 12

Hansa Yellow 74 pigment concentrates prepared from Examples 7, 8 and 9 (based on poly (ethylene glycol) PEG 200, PEG 300, PEG 400, and alkyl polyglucoside surfactant system) were used to tint Glidden Latex base paint Y3418, Glidden semi-gloss alkyd base paint Y4618, and experimental zero VOC latex base paint Y7800 using the standard yellow pigment concentrate (based on ethylene glycol and nonyl phenol ethoxylate) as a control. The colour differences were found to be as follows:

| Base Paint Used | Carrier Vehicle Used | Delta L Lightness Difference | Delta C Chroma Difference | Delta E Total Difference |
|---|---|---|---|---|
| Latex base Y3418 | PEG 200 | -0.50 | 0.34 | 0.45 |
| | PEG 300 | -0.20 | -0.01 | 0.03 |
| | PEG 400 | -0.03 | 0.35 | 0.35 |
| Alkyd base Y4618 | PEG 200 | -0.02 | 0.51 | 0.57 |
| | PEG 300 | 0.07 | -0.11 | 0.20 |
| | PEG 400 | 0.04 | 0.43 | 0.47 |
| Zero VOC Y7800 base | PEG 200 | -0.05 | 0.54 | 0.59 |
| | PEG 300 | -0.05 | 0.37 | 0.38 |
| | PEG 400 | -0.00 | 0.38 | 0.39 |

### EXAMPLE 13

In a manner similar to Examples 1 to 9 a high concentration by weight red oxide pigment dispersion was produced using PEG 400 as the pigment dispersion vehicle.

| Example | | 13 |
|---|---|---|
| Vehicle (pigment carrier) | | PEG 400 |
| Vehicle | | 10.00 |
| Water | | 10.45 |
| Nonyl phenol ethoxylate | | 0 |
| Alkyl polyglucoside | | 3.00 |
| Co-surfactants | | 5.50 |
| Soya lecithin | | 2.00 |
| Glycerine | | 2.50 |
| Biocide | | 0.25 |
| Red Oxide | | 66.30 |
| | | 100.00wt% |
| Weight | lb per gallon | 18.80 |
| | kg/l | 2.199 |
| PVC (pigment volume concentration) | | 45.12 |

| VOC (volatile organic concentration) | | |
|---|---|---|
| #/gal | | 0 |
| gms/liter | | 0 |
| Pigment weight % | | 66.23 |
| Pigment volume % | | 29.02 |
| The pigment dispersion provided a useful tint base for latex and alkyd paints. All percentages are by weight unless otherwise stated. | | |

### EXAMPLE 14

In a manner similar to Examples 1 to 9, a high concentration exterior yellow pigment dispersion at 63% PVC was produced using PEG 400 as the vehicle.

| Example | 14 |
|---|---|
| Vehicle (pigment carrier) | PEG 400 |
| Vehicle | 10.00 |
| Water | 32.50 |
| Nonyl phenol ethyoxylate | 0 |
| Alkyl polyglucoside | 6.00 |
| Co-surfactant | 2.90 |
| Glycerine | 3.00 |
| Biocide | 0.30 |
| Hansa Yellow 74 | 45.30 |
| | 100.00wt% |
| Weight lbs per gallon | 10.18 |
| PVC (pigment volume concentration) | 62.92 |

| VOC (volatile organic compounds) | |
|---|---|
| #/gal | 0 |
| gms/liter | 0 |
| Pigment weight % | 45.21 |
| Pigment volume % | 36.14 |
| The pigment dispersion provided a useful tint base for latex and alkyd paints. All percentages are by weight unless otherwise stated. | |

## Claims

1. An environmentally friendly aqueous tinting concentrate for paints, varnishes and woodstains which concentrate contains solid particulate pigment dispersed in a fluid medium comprising water, carrier vehicle and non-ionic surfactant comprising hydrophobic moiety wherein the carrier vehicle is a poly (ethylene glycol) having a number average molecular weight of 190 to 700 inclusive and the hydrophobic moiety of the surfactant is linked to a glycoside or thioglycoside moiety.

2. A tinting concentrate according to Claim 1 wherein the glycoside comprises a mixture of monoglycoside, diglycoside and triglycoside or their thioglycoside analogues.

3. A tinting concentrate according to Claim 1 or Claim 2 wherein the glycoside comprises over 50wt% of monoglycoside or its thioglycoside analogue.

4. A tinting concentrate according to any one of the preceding claims wherein the glycoside comprises between 20 and 30wt% of diglycoside.

5. A tinting concentrate according to any one of the preceding Claims wherein the glycoside comprises glucoside.

6. A tinting concentrate according to any one of the preceding Claims wherein the hydrophobic group is a linear alkyl group comprising 8 to 30 carbon atoms inclusive,

7. A tinting concentrate according to any one of the preceding Claims wherein the poly (ethylene glycol) carrier vehicle has a number average molecular weight of from 200 to 600.

8. An aqueous or organic solvent-based paint or the like wherein the paint or the like contains a tinter concentrate as claimed in any one of the preceding claims.

9. The use of a tinter concentrate as claimed in any one of Claims 1 to 7 to tint an aqueous or solvent-based paint or the like.

10. The use of a tinter concentrate as claimed in Claim 9 wherein the concentrate is dispensed via a bore having a diameter of from 1 to 4 mm.

## Patentansprüche

1. Ein Umwelt-freundliches wässeriges Abtönkonzentrat für Anstrichfarben, Lacke, Firnisse und Holzbeizen mit einem Inhalt von aus Einzelteilen bestehenden in einem flüssigen Bindemittel dispergierten Pigment welches Wasser, das Bindemittel und nichtiogenes Tensid in sich vereinigt und die wasserabweisende Hälfte darstellt in der das Bindemittel ein Polyäthylenglykol mit einem durchschnittlichen Molekulargewicht von 190 bis 700 ist und die wasserabstossende Hälfte des Tensid mit einem Glykosid oder Thioglykosid verbunden ist.

2. Ein Abtönkonzentrat gemäss Anspruch 1, in dem das Glykosid aus einer Mischung von Monoglykosid, Diglykosid und Triglykosid oder deren Thioglykosid Analogen besteht

3. Ein Abtönkonzentrat gemäss Anspruch 1 oder Anspruch 2 in dem das Glykosid mehr als 50 Gewichtprozent des Monoglykosid oder dessen Thioglykosid Analog darstellt

4. Ein Abtönkonzentrat gemäss einem jeglichen der obigen Ansprüche in dem das Glykosid zwischen 20 und 30 Gewichtprozent von Diglykosid enthält.

5. Ein Abtönkonzentrat gemäss einem jeglichen der obigen Ansprüche in dem das Glykosid ein Glukosid beinhält.

6. Ein Abtönkonzentrat gemäss einem jeglichen der obigen Ansprüche in dem die wasserabstossende Gruppe eine lineare Alkylgruppe mit 8 bis 30 Kohlenstoffatomen

7. Ein Abtönkonzentrat gemäss einem jeglichen der obigen Ansprüche in dem das Polyäthylenglykolhaltiges Rindemittel ein durchschnittliches Molekulargewicht zwischen 200 und 600 besitzt

8. Eine wässerige oder Lösungsmittel-gegründete Anstrichfarbe oder dergleichen in welcher die Anstrichfarbe oder dergleichen ein Abtonkonzentrat gemäss einem jeglichen der obigen Ansprüche enthält.

9. Die Anwendung eines Abtönkonzentrat gemäss einem der Ansprüche von 1 bis 7 zum Abtönen von wässerigen oder Lösungsmittel-gegründeten Anstrichfarben oder dergleichen

10. Die Anwendung eines Abtönkonzentrat gemäss Anspruch 9 wo das Konzentrat über eine Bohrung mit Durchmesser 1 bis 4 mm gezapft wird

## Revendications

1. Un concentré aqueux pour mise en couleurs des peintures, des vernis et des teintures à bois, sans contamination de l'environnement, au contenu de pigment particulaire solide, dispersé dans un véhicule fluide comportant de l'eau, de véhicule et des tensioactifs non-ionisants comportant une moitié hydrophobe dans laquelle le véhicule est un polyéthylène glycol de poids moléculaire moyen de 190 à 700 inclusivement, la moitié hydrophobe du tensioactif étant liée à une moitié glycoside ou thioglycoside

2. Un concentré pour mise en couleurs selon Revendication 1 dans lequel le glucoside comporte un mélange de monoglycoside, de diglycoside et de triglycoside ou de leur analogues thioglycosides

3. Un concentré pour mise en couleurs selon Revendication 1 ou selon Revendication 2 dans lequel le glucoside comporte un mélange de plus de 50 % de monoglycoside ou de son analogue thioglycoside.

4. Un concentré pour mise en couleurs selon n'importe quelle des revendications çi-dessus dans lequel le glycoside comporte entre 20 et 30 % pondéral de diglycoside

5. Un concentré pour mise en couleurs selon n'importe quelle des revendications çi-dessus où le glycoside comporte glucoside.

6. Un concentré pour mise en couleurs selon n'importe quelle des revendications çi-dessus dans lequel le groupe hydrophobe est un groupe alcoyle lináire au contenu d'entre 8 et 30 atomes de carbone inclusivement.

7. Un concentré pour mise en couleur selon n'importe quelle des revendications çi-dessus dans lequel le véhicule à base de polyéthylène glycol a un poids moléculaire moyen d'entre 200 et 600.

8. Une peinture à base d'eau ou d'un solvant organique ou pareil dans laquelle la peinture ou pareil produit comporte un concentré pour mise en couleurs selon n'importe quelle des revendications çi-dessus

9. L'emploi d'un concentré pour mise en couleurs selon n'importe quelle des revendications 1 à 7 pour la mise en couleurs d'une peinture aqueuse ou à base de solvant ou pareil

10. L'emploi d'un concentré pour mise en couleurs selon revendication 9 où le concentré est dosé via un alésage de diamètre d'entre 1 et 4 millimètres.
